# FASCICULE DE BREVET EUROPEEN

(11) **EP 4 121 635 B1**
(45) Date de publication et mention de la délivrance du brevet: **23.04.2025**
(21) Numéro de dépôt: 21716501.8
(22) Date de dépôt: 19.03.2021
(51) Int. Cl.: F01D 5/00, C04B 35/08, F01D 11/08, F01D 25/24, F01D 11/24, F01D 25/12

(54) **ENSEMBLE DE TURBINE ET MOTEUR À TURBINE À GAZ MUNI D'UN TEL ENSEMBLE**
ANORDNUNG FÜR TURBINE UND GASTURBINENTRIEBWERK MIT EINER SOLCHEN ANORDNUNG
TURBINE ASSEMBLY AND GAS TURBINE ENGINE COMPRISING SUCH AN ASSEMBLY

(30) Priorité: 20.03.2020 FR 2002745
(43) Date de publication de la demande: 25.01.2023
(73) Titulaire: SAFRAN AIRCRAFT ENGINES, 75015 Paris (FR)
(72) Inventeur: GAILLARD, Aurélien, 77550 MOISSY-CRAMAYEL (FR); CAZIN, Clément Emile André, 77550 MOISSY-CRAMAYEL (FR); JARROSSAY, Clément, 77550 MOISSY-CRAMAYEL (FR); TABARIN, Pascal Cédric, 77550 MOISSY-CRAMAYEL (FR); TABLEAU, Nicolas, Paul, 77550 MOISSY-CRAMAYEL (FR)
(74) Mandataire: Regimbeau
(86) Numéro de dépôt international: PCT/FR2021/050458
(87) Numéro de publication internationale: WO 2021/186134

(56) Documents cités:
- EP-A1- 1 593 813
- EP-A1- 3 034 803
- EP-A1- 3 118 417
- EP-A2- 1 176 285
- WO-A1-2015/108658
- WO-A1-2015/191169
- FR-A1- 3 056 637
- US-A1- 2018 087 401

## Description

### DOMAINE DE L'INVENTION

L'invention concerne un ensemble de turbine, comprenant une pluralité de secteurs d'anneau en matériau composite à matrice céramique (ou CMC), assemblés pour former un anneau de turbine, ainsi qu'une structure de support d'anneau.

Le domaine d'application de l'invention est notamment celui des moteurs aéronautiques à turbine à gaz ou turbomachine. L'invention est toutefois applicable à d'autres turbomachines, par exemple des turbines industrielles.

### ETAT DE LA TECHNIQUE

Dans les moteurs aéronautiques à turbine à gaz, l'amélioration du rendement et la réduction de certaines émissions polluantes conduisent à rechercher un fonctionnement à des températures toujours plus élevées. D'après l'état de la technique, on connaît déjà un ensemble d'anneau de turbine entièrement métallique. Il est toutefois nécessaire de refroidir tous les éléments de cet ensemble et en particulier l'anneau de turbine, car ce dernier est soumis à des flux très chauds, dont la température est supérieure à celle supportable par les matériaux métalliques.

Toutefois, ce refroidissement a un impact significatif sur la performance du moteur, car le flux de refroidissement utilisé est prélevé sur le flux principal du moteur. En outre, l'utilisation de métal pour l'anneau de turbine limite les possibilités d'augmenter la température au niveau de la turbine, ce qui permettrait pourtant d'améliorer les performances des moteurs aéronautiques.

Afin de tenter de résoudre le problème précité, il a été envisagé de réaliser un secteur d'anneau de turbine en matériau composite à matrice céramique (CMC), afin de s'affranchir de l'usage d'un matériau métallique.

Les matériaux composites à matrice céramique sont connus pour conserver leurs propriétés mécaniques à des températures nettement plus élevées que les métaux, ce qui les rend aptes à constituer des éléments de structure chaude. L'emploi de ce type de matériaux permet de réduire le débit de refroidissement des pièces et donc d'augmenter la performance de la turbomachine. En outre, les matériaux CMC présentent l'avantage d'avoir une masse volumique plus faible que celle des métaux habituellement utilisés pour réaliser un anneau de turbine. Ceci permet d'envisager un gain de masse important de l'ensemble de la turbomachine.

La réalisation de secteurs d'anneau de turbine en une seule pièce en matériau CMC est notamment décrite dans le document US 2012/0027572. Les secteurs d'anneau comportent une base annulaire dont la face interne définit la face interne de l'anneau de turbine et une face externe, à partir de laquelle s'étendent radialement deux pattes dont les extrémités sont maintenues entre les deux brides d'une structure métallique de support d'anneau.

L'utilisation de secteurs d'anneau en CMC permet ainsi de réduire significativement la ventilation nécessaire au refroidissement de l'anneau de turbine. Toutefois, le CMC ayant un comportement mécanique différent de celui d'un matériau métallique, son intégration ainsi que la manière de le positionner au sein de la turbine ont dû être repensés. En effet, le CMC ne supporte pas les montages frettés (usuellement employés pour les anneaux métalliques) et sa dilatation thermique est plus faible qu'un matériau métallique.

On connait déjà d'après le document WO 2015/191 169, un ensemble de turbine comprenant une pluralité de secteurs d'anneau de turbine en matériau composite céramique, une structure de support maintenue par un carter externe, (cette structure comprenant une virole annulaire et des secteurs annulaires d'entretoise), et un déflecteur d'air qui diffuse de l'air.

On connait également d'après le document WO 2015/108 658, un ensemble de turbine qui comprend une structure de support d'anneau et une pluralité de secteurs d'anneaux de turbine qui forment ensemble un anneau de turbine. Cet ensemble comprend également déflecteur muni d'un passage permettant l'introduction d'air de refroidissement sur la face radialement interne du secteur d'anneau de turbine.

Enfin, on connait d'après le document EP 3 118 417 un ensemble de turbine qui comprend une pluralité de secteurs d'anneaux de turbine réalisés en matériaux céramiques CMC et une structure de support d'anneau. Un déflecteur peut être disposé radialement entre le support et le secteur d'anneau.

Toutefois, aucun de ces documents ne décrit ni ne suggère le montage du diffuseur d'air par emboitement sur l'un desdits secteurs d'entretoise, ni la structure du diffuseur d'air conforme à l'invention.

### EXPOSE DE L'INVENTION

Un but de l'invention est de proposer un ensemble d'anneau de turbine qui ne présente pas les inconvénients précités et notamment qui soit moins lourd que les ensembles d'anneaux de turbine connus de l'état de la technique, avec, notamment la suppression de l'ensemble des liaisons boulonnées, habituellement présentes dans ce genre d'intégration.

A cet effet, l'invention concerne un ensemble de turbine s'étendant autour d'un axe longitudinal, cet ensemble comprenant :
- une pluralité de secteurs d'anneau de turbine en matériau composite à matrice céramique, assemblés circonférentiellement bout-à-bout pour former un anneau de turbine, chaque secteur d'anneau de turbine comprenant une base avec une face radialement interne et une face radialement externe à partir de laquelle s'étendent radialement vers l'extérieur une patte amont et une patte aval, espacées axialement l'une de l'autre,
- une structure de support d'anneau, maintenue par un carter externe annulaire de turbine, ladite structure de support d'anneau comprenant une virole annulaire, et une pluralité de secteurs angulaires d'entretoise formant ensemble une entretoise annulaire, ladite entretoise annulaire étant fixée à ladite virole annulaire, et chaque secteur d'anneau de turbine étant fixé, par lesdites pattes, sur ladite entretoise annulaire,
- au moins un diffuseur d'air, configuré pour diffuser de l'air de refroidissement sur ladite face radialement externe d'au moins l'un desdits secteurs d'anneau de turbine.

Conformément à l'invention, ledit au moins un diffuseur d'air est monté par emboîtement sur l'un desdits secteurs angulaires d'entretoise, dans une position emboîtée, - le diffuseur d'air présente une cavité interne et une face radialement interne percée d'une pluralité d'orifices d'éjection d'air débouchant dans cette cavité, chaque secteur angulaire d'entretoise possède une face radialement interne et présente sur sa face radialement interne, une rainure d'emboitement rectiligne, qui présente sur une partie de sa longueur, une zone d'emboitement de section transversale en forme de T, en ce que chaque diffuseur d'air est muni, à sa partie radialement externe, d'un organe d'accrochage également en forme de T, configuré pour pouvoir être reçu et emboité dans ladite zone d'emboitement, l'organe d'accrochage du diffuseur d'air est percé d'un trou d'admission d'air débouchant dans ladite cavité interne et chaque secteur angulaire d'entretoise comprend au moins un conduit d'alimentation en air, débouchant d'une part sur l'une de ses faces amont et d'autre part dans le fond de zone d'emboitement en T de la rainure, en regard de l'embouchure du trou d'admission d'air de l'organe d'accrochage du diffuseur, lorsque ce diffuseur est dans sa position emboitée, de façon que ce conduit d'alimentation en air soit en communication fluidique avec lesdits orifices d'éjection d'air.

Grâce à ces caractéristiques de l'invention, et notamment à l'emboîtement du diffuseur d'air sur l'un des secteurs angulaires d'entretoise, le montage du diffuseur est simplifié, il n'est plus nécessaire d'utiliser des douilles ou des goupilles pour sa fixation et la masse globale de l'ensemble d'anneau de turbine est moindre.

Par ailleurs, ce montage permet de conserver l'emploi d'un anneau en matériau composite à matrice céramique et les avantages associés.

Selon d'autres caractéristiques avantageuses et non limitatives de l'invention, prises seules ou en combinaison :
- ledit organe d'accrochage comprend au moins une butée coopérant avec la zone d'emboitement en T de ladite rainure d'emboitement, de façon à bloquer le déplacement axial du diffuseur d'air, une fois celui-ci dans la position emboitée ;
- chaque secteur angulaire d'entretoise comprend un crochet amont orienté axialement vers l'aval et un doigt aval, la virole annulaire comprend deux gorges annulaires débouchant vers l'amont, et en ce que ces gorges sont destinées à recevoir respectivement ledit crochet amont et ledit doigt aval ;
- chaque secteur d'entretoise est muni d'une bride amont, et un distributeur de la turbine, formant une couronne disposée en amont dudit ensemble d'anneau de turbine appuie axialement contre cette bride amont, afin de maintenir ledit crochet amont et ledit doigt aval respectivement dans les gorges correspondantes de la virole annulaire ;
- ladite virole annulaire comprend une bride aval, cette bride aval présentant, dans la direction axiale de l'anneau de turbine, une épaisseur globalement inférieure à l'épaisseur de la patte aval du secteur d'anneau, la bride aval exerçant une contrainte sur la patte aval du secteur d'anneau ;
- ladite patte amont d'un secteur d'anneau est fixée sur la bride amont du secteur d'entretoise à l'aide de pions de fixation, chaque secteur d'entretoise comprend plusieurs oreilles aval et ladite patte aval d'un secteur d'anneau est fixée sur au moins une oreille aval de ce même secteur d'entretoise à l'aide de pions de fixation, les pions s'étendant principalement axialement ;
- chaque secteur angulaire d'entretoise présente à ses deux extrémités circonférentielles, des rainures d'étanchéité pour la réception de languettes d'étanchéité, ces languettes d'étanchéité étant disposées dans lesdites rainures d'étanchéité entre deux secteurs angulaires d'entretoise disposés circonférentiellement bout à bout.

L'invention concerne également une turbomachine comprenant un ensemble de turbine, tel que précité.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 représente une vue en coupe longitudinale d'un ensemble de turbine conforme à l'invention, monté dans une turbomachine.
- la figure 2 est une vue en coupe longitudinale agrandie d'un ensemble de turbine conforme à l'invention.
- la figure 3 est une vue en élévation d'une extrémité d'un secteur angulaire d'entretoise.
- la figure 4 est une vue en perspective d'un diffuseur d'air conforme à l'invention.
- la figure 5 est une vue en perspective et en transparence d'un secteur angulaire d'entretoise, sur lequel sont montés deux diffuseurs.
- la figure 6 est une vue de dessous d'un secteur angulaire d'entretoise sur lequel est monté un diffuseur.
- la figure 7 est une vue similaire à la figure 6 mais sans le diffuseur.

### DESCRIPTION DETAILLEE DE L'INVENTION

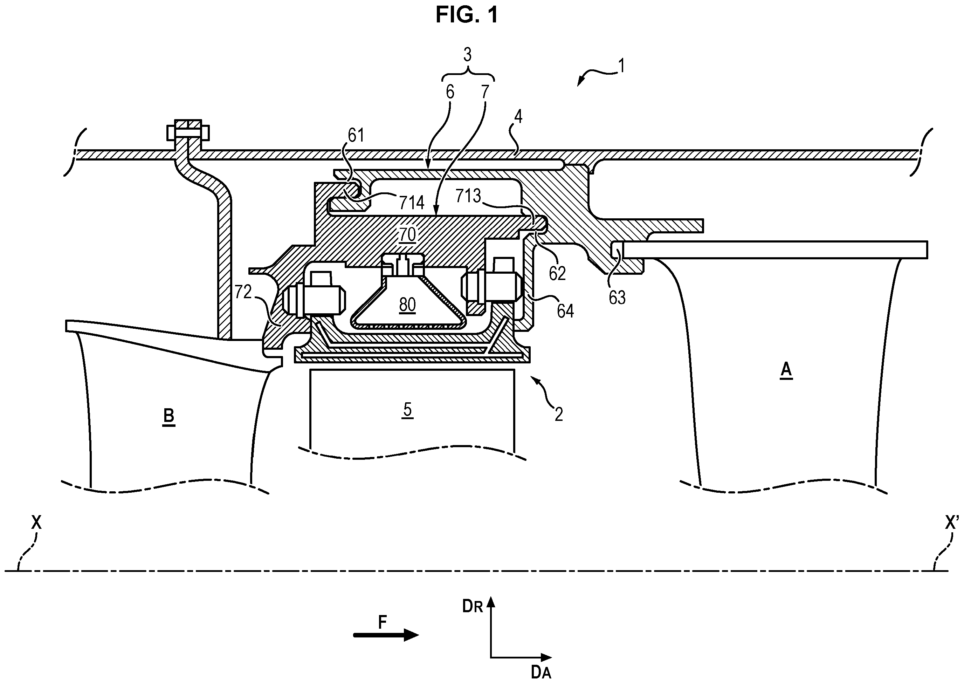

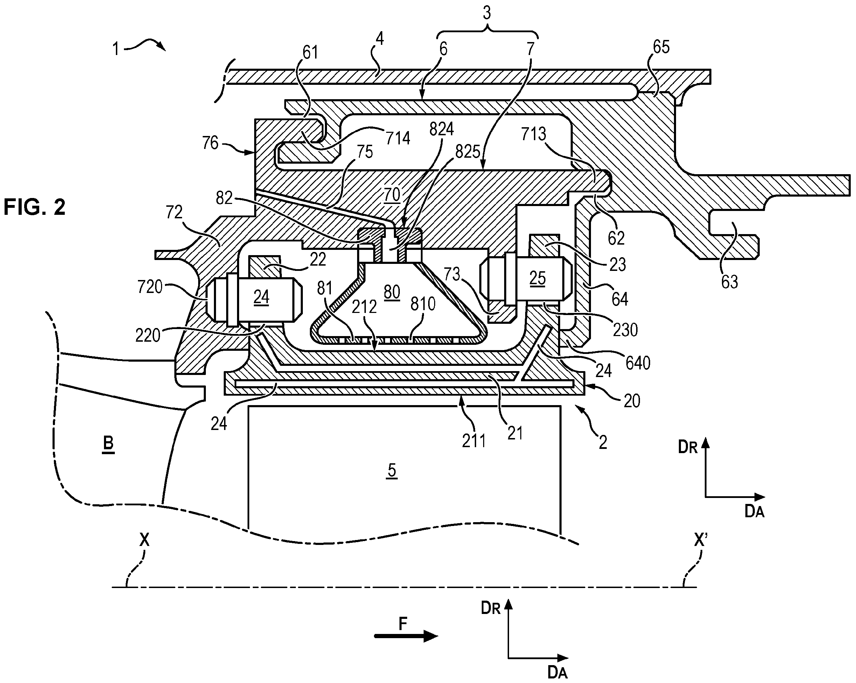

Un ensemble de turbine 1 conforme à l'invention va maintenant être décrit en liaison avec les figures 1 et 2. Cet ensemble 1 s'étend autour d'un axe longitudinal X-X'.

Sur la figure 1, la flèche D_{A} indique la direction axiale de l'ensemble de turbine 1, tandis que la flèche D_{R} indique sa direction radiale. Pour des raisons de simplification de la représentation, les figures 1 et 2 sont des vues partielles de cet ensemble, qui est en réalité annulaire.

Cet ensemble 1 comprend notamment un anneau de turbine 2 en matériau composite à matrice céramique (CMC), centré sur l'axe longitudinal X-X' et une structure de support d'anneau 3, maintenue par un carter externe 4 annulaire de turbine, ce dernier n'étant visible que sur la figure 1.

L'anneau de turbine 2 entoure un ensemble d'aubes de turbine 5.

Dans la suite de la description, la turbine décrite est une turbine haute pression. Toutefois, l'invention s'applique également à une turbine basse pression.

L'anneau de turbine 2 est formé d'une pluralité de secteurs angulaires d'anneau 20, qui sont mis bout à bout circonférentiellement pour former un anneau.

Chaque secteur angulaire d'anneau 20 présente une section sensiblement en forme de lettre grecque Pi (ou Π) inversé, avec une base 21, présentant une face radialement interne 211, qui définit une portion angulaire de la face interne de l'anneau de turbine 2 et une face radialement externe 212, qui définit une portion angulaire de la face externe de l'anneau turbine et à partir de laquelle s'étendent radialement vers l'extérieur une patte amont 22 et une patte aval 23.

Les termes « amont » et « aval » sont utilisés ici en référence au sens d'écoulement du flux gazeux, à l'intérieur de l'anneau de turbine, représenté par la flèche F sur les figures 1 et 2. Les deux pattes 22 et 23 s'étendent sur toute la largeur du secteur d'anneau, dans le sens circonférentiel. Elles sont espacées axialement l'une de l'autre.

La patte amont 22 est percée d'une pluralité d'orifices axiaux 220 et la patte aval 23 est percée d'une pluralité d'orifices axiaux 230.

De façon classique, l'étanchéité entre deux secteurs angulaires 20 voisins est assurée par des languettes d'étanchéité (non visibles sur les figures), logées dans des rainures d'étanchéité 24 ménagées aux deux extrémités de chaque secteur d'anneau 20, les rainures 24 se faisant face lorsque deux secteurs 20 sont assemblés bout à bout.

La structure de support d'anneau 3 comprend plusieurs pièces distinctes, assemblés les unes aux autres, à savoir une virole annulaire 6, et conformément à l'invention, une entretoise annulaire 7.

La virole annulaire 6 peut être formée par une pièce de révolution, c'est-à-dire s'étendant sur 360° ou bien être réalisée par un assemblage d'une pluralité de secteurs angulaires mis bout à bout.

Comme cela apparaît mieux sur la figure 2, la virole annulaire 6 présente une gorge annulaire amont 61, qui débouche vers l'amont, une gorge annulaire médiane 62, qui débouche également vers l'amont et enfin une gorge annulaire aval 63, qui débouche vers l'aval. Ces différentes gorges annulaires sont centrées sur l'axe longitudinal X-X' et elles s'étendent axialement.

La gorge annulaire aval 63 est destinée à recevoir l'extrémité d'une aube d'un distributeur A (ici par exemple un distributeur basse pression) de la turbine basse pression, disposée en aval de la turbine haute pression et visible uniquement sur la figure 1.

En outre, la virole annulaire 6 comprend une bride aval annulaire 64, qui s'étend radialement vers l'intérieur et dont l'extrémité 640 est recourbée vers l'amont de façon à s'étendre axialement. L'épaisseur de cette bride 64 dans sa partie radiale est suffisamment faible pour qu'elle conserve un caractère élastique, souple.

Enfin, la virole annulaire 6 présente sur sa face radialement externe, une saillie 65, destinée à venir en butée radialement contre le carter externe 4. La virole 6 est fixée sur ce carter 4 par des moyens de fixation non visibles sur les figures (frettage). Selon une autre variante de réalisation non représentée sur les figures, la virole peut être réalisée d'un bloc avec le carter externe 4.

L'entretoise annulaire 7 est constituée d'une pluralité de secteurs angulaires 70 d'entretoise, assemblés circonférentiellement bout-à-bout.

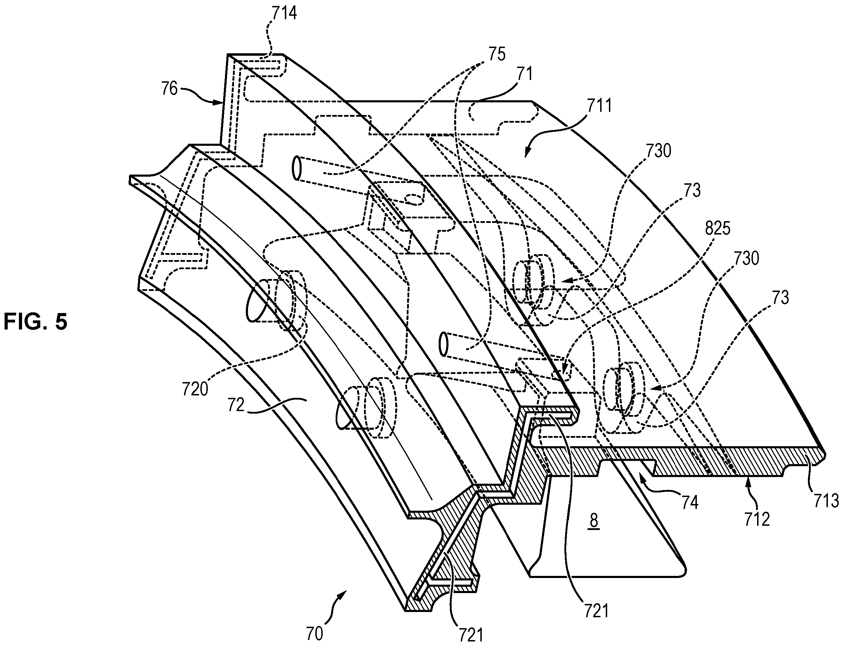

L'un de ces secteurs d'entretoise 70 apparaît mieux sur la figure 5. Chaque secteur 70 comprend un corps incurvé 71 qui présente une face radialement externe 711 et une face radialement interne 712. Le bord aval incurvé de ce corps 71 définit un doigt aval 713 orienté axialement. Ce doigt aval 713 est destiné à venir s'insérer dans la gorge annulaire médiane 62 de la virole 6. Comme cela apparaît mieux sur la figure 2, l'assemblage de l'entretoise 7 et de la virole 6 est fait de sorte que la face radialement externe du doigt aval 713 soit plaquée contre la face radialement interne de la gorge annulaire médiane 62, et ce, de façon à assurer l'étanchéité entre les deux pièces.

Un crochet amont 714 en forme de secteur d'anneau, orienté axialement vers l'aval fait saillie vers l'extérieur depuis l'extrémité amont de la face radialement externe 711. Ce crochet amont 714 est destiné à venir s'insérer dans la gorge annulaire amont 61 de la virole annulaire 6. Comme on peut le voir sur la figure 2, l'assemblage de l'entretoise 7 et de la virole 6 est fait de sorte que la face radialement externe de la gorge annulaire amont 61 soit plaquée contre la face radialement interne du crochet amont 714, et ce, de façon à assurer l'étanchéité entre les deux pièces.

Sur la figure 2, on peut également voir que le contact du doigt aval 713 vers le haut et du crochet amont vers le bas garantit le positionnement radial de chaque secteur d'entretoise 70 par rapport à la virole annulaire 6 (effet de basculement).

En outre, le corps 71 comprend une bride amont 72 et une pluralité d'oreilles aval 73. Sur la figure 5, on peut voir que ces oreilles 73 sont par exemple au nombre de deux par secteur 70. Chaque oreille 73 est percée d'un orifice axial 730. Par ailleurs, la bride 72 présente plusieurs cavités 720, borgnes, axiales débouchant vers l'aval.

La bride amont 72 et les oreilles aval 73 s'étendent radialement ou sensiblement radialement en direction de l'intérieur de l'ensemble d'anneau 1, c'est-à-dire en direction de l'axe X-X'.

L'ensemble d'anneau de turbine 1 comprend en outre des pions axiaux amont 24 et des pions axiaux aval 25. Les pions axiaux amont 24 sont insérés dans les cavités borgnes 720 et au travers des orifices 220, de façon à assurer la fixation de la patte amont 22 du secteur d'anneau 20 sur la bride amont 72. Les pions axiaux aval 25 sont insérés au travers des orifices axiaux 730 de l'entretoise 7 et 230 du secteur d'anneau 20, de façon à assurer la fixation de la patte aval 23 du secteur d'anneau 20 sur les oreilles 73. Les différents pions axiaux sont répartis régulièrement autour de l'axe longitudinal X-X' de l'anneau.

Lorsque l'assemblage est effectué, les oreilles 73 sont disposées en amont de la patte aval 23 de l'anneau 2 et la bride amont 72 est en amont de la patte amont 22.

En outre, les pattes amont 22 et aval 23 de chaque secteur d'anneau 20 sont maintenues respectivement entre la bride amont 72 et la bride 64, qui exercent chacune une contrainte axiale sur ces pattes, l'extrémité 640 de la bride 64 appuyant contre la face aval de la patte aval 23, ces contraintes axiales étant opposées.

La bride amont 72 est globalement plus épaisse en direction axiale (à l'exception des zones munies des carters 720) que la partie radiale de la bride 64. La bride amont 72 est donc plus rigide et la bride 64 plus souple et déformable.

Enfin, comme on peut le voir sur la figure 1, l'ensemble d'anneau de turbine 1 est disposé entre deux étages de distributeur, ici entre le distributeur A par exemple basse pression et le distributeur B, par exemple ici haute pression de la turbine haute pression. Ce distributeur B, disposé en amont de l'ensemble d'anneau de turbine 1 appuie axialement contre la bride amont 72. Ainsi, en fonctionnement, la reprise des efforts du distributeur B est assurée par l'entretoise 7 en limitant la transmission de ces efforts à l'anneau 2 en CMC, du fait de la raideur importante de la bride amont 72. La transmission des efforts à l'anneau 2 est également limitée par le caractère souple de la bride aval 64.

Enfin, une fois l'assemblage effectué, la virole annulaire 6 entoure l'entretoise annulaire 7, qui entoure elle-même l'anneau 2, de sorte que ces trois éléments sont concentriques et coaxiaux d'axe longitudinal X-X'.

De façon avantageuse, et comme cela apparaît mieux sur la figure 5, chaque secteur angulaire d'entretoise 70 présente à ses deux extrémités, des rainures d'étanchéité 721 pour la réception de languettes d'étanchéité. Ces languettes, non représentées sur les figures, sont disposées entre deux secteurs angulaires d'entretoise 70, disposées circonférentiellement bout-à-bout. Ceci permet d'assurer l'étanchéité entre deux secteurs 70 voisins.

De préférence, ces rainures d'étanchéité 721 sont ménagées aux deux extrémités de la bride amont 72, ainsi qu'aux deux extrémités du crochet 714.

L'ensemble de turbine 1 comprend également un diffuseur d'air 8, destiné à diffuser de l'air de refroidissement sur la face radialement externe 212 de la base 21. Ce diffuseur d'air 8 comprend des parois qui délimitent une cavité intérieure 80 (voir figure 2). Dans l'exemple de réalisation représenté sur les figures, les parois de ce diffuseur d'air présentent la forme d'une pyramide tronquée.

Ce diffuseur d'air 8 présente une paroi radialement interne 81, de préférence plane, percée d'une pluralité d'orifice d'éjection d'air 810.

Conformément à l'invention, chaque diffuseur d'air 8 est monté par emboîtement sur l'un des secteurs angulaires d'entretoise 70. Dans l'exemple représenté sur la figure 5, deux diffuseurs d'air 8 sont montés sur un secteur angulaire d'entretoise 70. Ils sont dans une position dite « emboîtée ».

À cet effet, chaque secteur angulaire d'entretoise 70 présente sur l'une de ses faces radialement internes, ici sa face 712, une rainure d'emboitement 74 rectiligne (voir figures 5 à 7). Cette rainure est rectiligne, c'est-à-dire qu'elle n'est pas incurvée, alors qu'elle est ménagée dans le corps 71 qui est incurvé.

De façon avantageuse, les secteurs d'entretoise 70 sont fabriqués par fabrication additive.

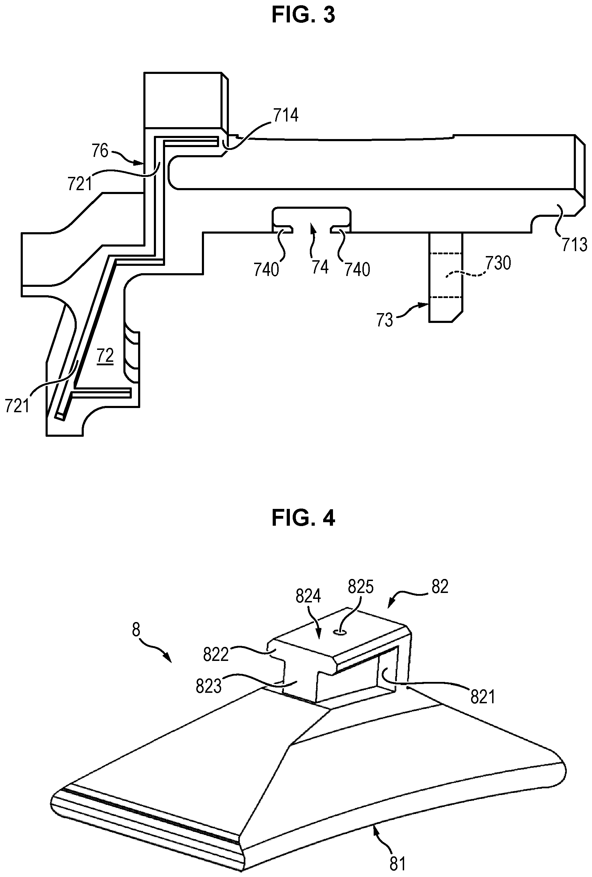

En outre, cette rainure 74 présente sur une partie de sa longueur, de préférence sa partie centrale, une section transversale en forme de T, formant une zone d'emboitement 742. Cette section transversale en forme de T apparaît mieux sur la coupe de la figure 3. A cet endroit, la rainure 74 est munie ponctuellement de deux languettes 740 se faisant face et espacées l'une de l'autre, de façon à délimiter les deux branches du T.

Par ailleurs, comme cela apparaît mieux sur la figure 4, le diffuseur d'air 8 présente au niveau de sa partie radialement externe, ici au niveau du sommet de la pyramide tronquée, un organe d'accrochage 82, également en forme de T, configuré pour pouvoir être reçu et emboîté par coulissement dans la rainure 74. Cette dernière étant rectiligne le coulissement est facilité.

De façon avantageuse, cet organe d'accrochage 82 présente à l'une de ses extrémités, deux butées 821, disposées de part et d'autre du T. La branche horizontale 822 de l'organe d'accrochage en forme de T est configurée pour être reçue dans la rainure 74 entre le fond de celle-ci et les deux languettes 740, tandis que la branche verticale 823 du T est reçue entre les deux languettes 740.La face radialement externe 824 de l'organe 82 est plane.

Des formes d'emboitement complémentaire de l'organe d'accrochage 82 et de la rainure 74, autres qu'une forme en T, pourraient également être envisagées.

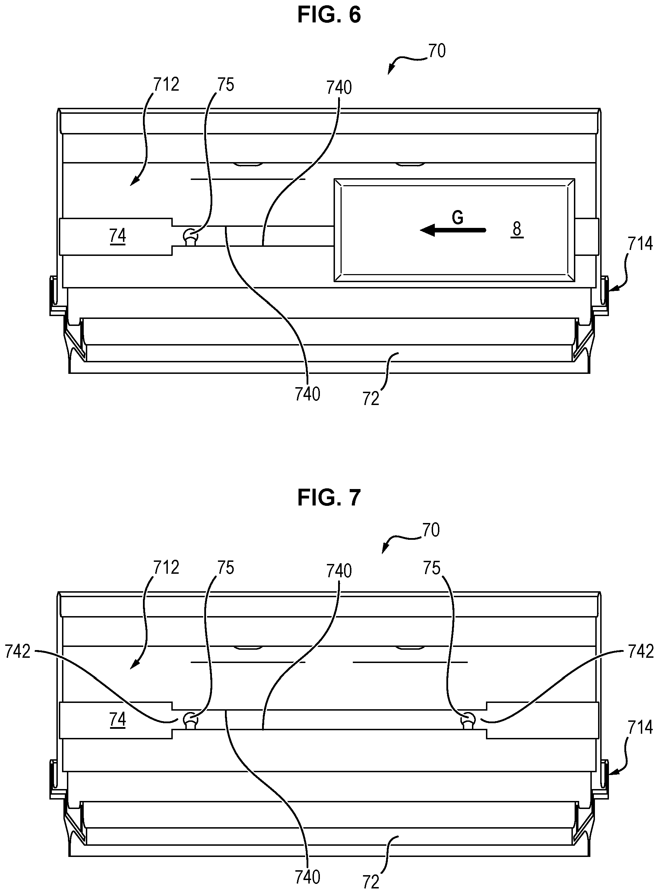

Le diffuseur d'air 8 peut ainsi être inséré par coulissement axial dans la rainure 74, depuis l'une des extrémités du secteur 70 (flèche G d'insertion sur la figure 6), les languettes 740 retenant la branche horizontale 822 du T, jusqu'à ce que les deux butées 821 parviennent au contact des deux languettes respectives 740. Ces butées 821 bloquent ainsi le coulissement axial du diffuseur d'air 8 à l'intérieur de la rainure 740. Le diffuseur 8 ne peut pas se déplacer davantage vers le centre du secteur d'entretoise 70. Des cales additionnelles, non représentées sur les figures, peuvent être ajoutées pour empêcher le déplacement du diffuseur 8 dans le sens opposé à celui de son insertion.

En outre, l'organe d'accrochage 82 est percé d'au moins un trou d'admission d'air 825 qui débouche à la fois sur la face externe 824 de l'organe d'accrochage 82 et à l'intérieur de la cavité 80.

Chaque secteur angulaire d'entretoise 70 comprend en outre au moins un conduit d'alimentation en air 75, (dans le mode de réalisation représenté sur la figure 5 deux conduit 75). Chaque conduit 75 débouche d'une part sur la face amont 76 du secteur angulaire 70 et d'autre part, dans le fond de la rainure 74, en regard de la portion de rainure 74 présentant une section en forme de T (zone d'emboîtement 742). Comme on peut le voir sur la figure 5, le conduit 75 est configuré de sorte que lorsque le diffuseur d'air 8 est positionné en butée à l'intérieur de la rainure 74, contre les languettes 740, (position emboitée), ce conduit 75 débouche au niveau de l'embouchure du trou d'admission d'air 825 de l'organe d'accrochage 82 du diffuseur 8.

Ainsi, l'air de refroidissement, prélevé depuis un étage du compresseur de la turbomachine, pénètre dans le conduit 75 puis dans le diffuseur 8 où il est éjecté via les orifices d'éjection d'air 810, en direction de la face interne 212 de la base 21 du secteur d'anneau, conduisant ainsi au refroidissement de celle-ci.

De façon avantageuse, la virole 6, l'entretoise 7 et le diffuseur 8 sont réalisés en métal.

## Revendications

1. Ensemble de turbine (1) s'étendant autour d'un axe longitudinal (X-X'), cet ensemble (1) comprenant :
- une pluralité de secteurs d'anneau de turbine (20) en matériau composite à matrice céramique, assemblés circonférentiellement bout-à-bout pour former un anneau de turbine (2), chaque secteur d'anneau de turbine (20) comprenant une base (21) avec une face radialement interne (211) et une face radialement externe (212) à partir de laquelle s'étendent radialement vers l'extérieur une patte amont (22) et une patte aval (23), espacées axialement l'une de l'autre,
- une structure de support d'anneau (3), maintenue par un carter externe annulaire (4) de turbine, ladite structure de support d'anneau (3) comprenant une virole annulaire (6), et une pluralité de secteurs angulaires d'entretoise (70) formant ensemble une entretoise annulaire (7), ladite entretoise annulaire (7) étant fixée à ladite virole annulaire (6), et chaque secteur d'anneau de turbine (20) étant fixé par lesdites pattes (22, 23) sur ladite entretoise annulaire (7),
- au moins un diffuseur d'air (8), configuré pour diffuser de l'air de refroidissement sur ladite face radialement externe (212) d'au moins l'un desdits secteurs d'anneau de turbine (20),
- au moins un diffuseur d'air (8) est monté par emboîtement sur l'un desdits secteurs angulaires d'entretoise (70), dans une position emboîtée, en ce que le diffuseur d'air (8) présente une cavité interne (80) et une face radialement interne (81) percée d'une pluralité d'orifices d'éjection d'air (810) débouchant dans cette cavité (80), en ce que chaque secteur angulaire d'entretoise (70) possède une face radialement interne (712) et présente sur sa face radialement interne (712), une rainure d'emboitement rectiligne (74), qui présente sur une partie de sa longueur, une zone d'emboitement (742) de section transversale en forme de T, en ce que chaque diffuseur d'air (8) est muni, à sa partie radialement externe, d'un organe d'accrochage (82) également en forme de T, configuré pour pouvoir être reçu et emboité dans ladite zone d'emboitement (742), en ce que l'organe d'accrochage (82) du diffuseur d'air (8) est percé d'un trou d'admission d'air (825) débouchant dans ladite cavité interne (80) et en ce que chaque secteur angulaire d'entretoise (70) comprend au moins un conduit d'alimentation en air (75), débouchant d'une part sur l'une de ses faces amont (76) et d'autre part dans le fond de la zone d'emboitement en T (742) de la rainure (74), en regard de l'embouchure du trou d'admission d'air (825) de l'organe d'accrochage (82) du diffuseur, lorsque ce diffuseur (8) est dans sa position emboitée, de façon que ce conduit d'alimentation en air (75) soit en communication fluidique avec lesdits orifices d'éjection d'air (810).

2. Ensemble de turbine (1) selon la revendication 1, **caractérisé en ce que** ledit organe d'accrochage (82) comprend au moins une butée (821) coopérant avec la zone d'emboitement en T (742) de ladite rainure d'emboitement (74), de façon à bloquer le déplacement axial du diffuseur d'air (8), une fois celui-ci dans la position emboitée.

3. Ensemble de turbine (1) selon la revendication 1 ou 2, **caractérisé en ce que** chaque secteur angulaire d'entretoise (70) comprend un crochet amont (714) orienté axialement vers l'aval et un doigt aval (713), **en ce que** la virole annulaire (6) comprend deux gorges annulaires (61, 62) débouchant vers l'amont, et **en ce que** ces gorges (61, 62) sont destinées à recevoir respectivement ledit crochet amont (714) et ledit doigt aval (713).

4. Ensemble de turbine (1) selon la revendication 3, **caractérisé en ce que** chaque secteur d'entretoise (70) est muni d'une bride amont (72), et **en ce qu'**un distributeur (B) de la turbine, formant une couronne disposée en amont dudit ensemble d'anneau de turbine (1) appuie axialement contre cette bride amont (72), afin de maintenir ledit crochet amont (714) et ledit doigt aval (713) respectivement dans les gorges (61, 62) correspondantes de la virole annulaire (6).

5. Ensemble de turbine (1) selon l'une quelconque des revendications précédentes, **caractérisé en ce que** ladite virole annulaire (6) comprend une bride aval (64), cette bride aval (64) présentant, dans la direction axiale de l'anneau de turbine (2), une épaisseur globalement inférieure à l'épaisseur de la patte aval (23) du secteur d'anneau (20), la bride aval (64) exerçant une contrainte sur la patte aval (23) du secteur d'anneau (20).

6. Ensemble de turbine (1) selon la revendication 5, **caractérisé en ce que** ladite patte amont (22) d'un secteur d'anneau (20) est fixée sur la bride amont (72) du secteur d'entretoise (70) à l'aide de pions de fixation (24), **en ce que** chaque secteur d'entretoise (70) comprend plusieurs oreilles aval (73) et **en ce que** ladite patte aval (23) d'un secteur d'anneau (20) est fixée sur au moins une oreille aval (73) de ce même secteur d'entretoise (70) à l'aide de pions de fixation (25), les pions (24, 25) s'étendant principalement axialement.

7. Ensemble de turbine (1) selon l'une quelconque des revendications précédentes, **caractérisé en ce que** chaque secteur angulaire d'entretoise (70) présente à ses deux extrémités circonférentielles, des rainures d'étanchéité (721) pour la réception de languettes d'étanchéité, ces languettes d'étanchéité étant disposées dans lesdites rainures d'étanchéité (721) entre deux secteurs angulaires d'entretoise (70) disposés circonférentiellement bout à bout.

8. Turbomachine comprenant un ensemble de turbine (1) selon l'une quelconque des revendications précédentes.

## Patentansprüche

1. Turbinenanordnung (1), die sich um eine Längsachse (X-X') erstreckt, wobei diese Anordnung (1) umfasst:
- eine Vielzahl von Turbinenringsektoren (20) aus Verbundmaterial mit keramischer Matrix, die umfangsmäßig endseitig zusammengefügt sind, um einen Turbinenring (2) zu bilden, wobei jeder Turbinenringsektor (20) eine Basis (21) mit einer radial inneren Fläche (211) und einer radial äußeren Fläche (212) umfasst, von der aus sich ein stromaufwärtiger Schenkel (22) und ein stromabwärtiger Schenkel (23), die axial voneinander beabstandet sind, radial nach außen erstrecken,
- eine Ringträgerstruktur (3), die von einem ringförmigen äußeren Turbinengehäuse (4) gehalten wird, wobei die Ringträgerstruktur (3) einen Ringmantel (6) und eine Vielzahl von Abstandshalter-Winkelsektoren (70) umfasst, die zusammen einen ringförmigen Abstandshalter (7) bilden, wobei der ringförmige Abstandshalter (7) an dem Ringmantel (6) befestigt ist und jeder Turbinenringsektor (20) durch die Schenkel (22, 23) an dem ringförmigen Abstandshalter (7) befestigt ist,
- mindestens einen Luftverteiler (8), der ausgelegt ist, um Kühlluft auf die radial äußere Fläche (212) von mindestens einem der Turbinenringsektoren (20) zu verteilen,
- mindestens ein Luftverteiler (8), der auf einem der Abstandshalter-Winkelsektoren (70) durch Einstecken in einer eingesteckten Position angebracht ist, dass der Luftverteiler (8) einen inneren Hohlraum (80) und eine radial innere Fläche (81) aufweist, die von einer Vielzahl von Luftauslassöffnungen (810) durchbrochen ist, die in diesen Hohlraum (80) ausmünden, dass jeder Abstandshalter-Winkelsektor (70) eine radial innere Fläche (712) besitzt und auf seiner radial inneren Fläche (712) eine gerade Einstecknut (74) aufweist, die auf einem Teil ihrer Länge einen Einsteckbereich (742) mit T-förmigem Querschnitt aufweist, dass jeder Luftverteiler (8) an seinem radial äußeren Teil mit einem ebenfalls T-förmigen Einhängeorgan (82) versehen ist, das ausgelegt ist, um in dem Einsteckbereich (742) aufgenommen und eingesteckt zu sein, dass das Einhängeorgan (82) des Luftverteilers (8) von einem Lufteinlassloch (825) durchbrochen ist, das in den inneren Hohlraum (80) ausmündet und dass jeder Abstandshalter-Winkelsektor (70) mindestens eine Luftzufuhrleitung (75) umfasst, die einerseits auf einer ihrer stromaufwärtigen Flächen (76) und andererseits im Boden des T-förmigen Einsteckbereichs (742) der Nut (74) ausmündet, der Mündung des Lufteinlasslochs (825) des Einhängeorgans (82) des Verteilers zugewandt, wenn dieser Verteiler (8) in seiner eingesteckten Position ist, so dass diese Luftzufuhrleitung (75) in Fluidkommunikation mit den Luftauslassöffnungen (810) ist.

2. Turbinenanordnung (1) nach Anspruch 1, **dadurch gekennzeichnet, dass** das Einhängeorgan (82) mindestens einen Anschlag (821) umfasst, der mit dem T-förmigen Einsteckbereich (742) der Einstecknut (74) derart zusammenwirkt, dass die axiale Verlagerung des Luftverteilers (8) blockiert wird, sobald sich dieser in der eingesteckten Position befindet.

3. Turbinenanordnung (1) nach Anspruch 1 oder 2, **dadurch gekennzeichnet, dass** jeder Abstandshalter-Winkelsektor (70) einen axial nach stromabwärts gerichteten stromaufwärtigen Haken (714) und einen stromabwärtigen Finger (713) aufweist, dass der Ringmantel (6) zwei ringförmige Nuten (61, 62) aufweist, die nach stromaufwärts ausmünden, und dass diese Nuten (61, 62) dazu bestimmt sind, jeweils den stromaufwärtigen Haken (714) und den stromabwärtigen Finger (713) aufzunehmen.

4. Turbinenanordnung (1) nach Anspruch 3, **dadurch gekennzeichnet, dass** jeder Abstandshalter-Sektor (70) mit einem stromaufwärtigen Flansch (72) versehen ist, und dass ein Leitapparat (B) der Turbine, der einen Kranz bildet, der stromaufwärts der Turbinenringanordnung (1) angeordnet ist, axial gegen diesen stromaufwärtigen Flansch (72) drückt, um den stromaufwärtigen Haken (714) und den stromabwärtigen Finger (713) jeweils in den entsprechenden Nuten (61, 62) des Ringmantels (6) zu halten.

5. Turbinenanordnung (1) nach einem der vorhergehenden Ansprüche, **dadurch gekennzeichnet, dass** der Ringmantel (6) einen stromabwärtigen Flansch (64) umfasst, wobei dieser stromabwärtige Flansch (64) in der axialen Richtung des Turbinenrings (2) eine Dicke aufweist, die allgemein geringer ist als die Dicke des stromabwärtigen Schenkels (23) des Ringsektors (20), wobei der stromabwärtige Flansch (64) eine Spannung auf den stromabwärtigen Schenkel (23) des Ringsektors (20) ausübt.

6. Turbinenanordnung (1) nach Anspruch 5, **dadurch gekennzeichnet, dass** der stromaufwärtige Schenkel (22) eines Ringsektors (20) mit Hilfe von Befestigungsstiften (24) an dem stromaufwärtigen Flansch (72) des Abstandshalter-Sektors (70) befestigt ist, dass jeder Abstandshalter-Sektor (70) mehrere stromabwärtige Ohren (73) umfasst und dass der stromabwärtige Schenkel (23) eines Ringsektors (20) mit Hilfe von Befestigungsstiften (25) an mindestens einem stromabwärtigen Ohr (73) desselben Abstandshalter-Sektors (70) befestigt ist, wobei sich die Stifte (24, 25) hauptsächlich axial erstrecken.

7. Turbinenanordnung (1) nach einem der vorhergehenden Ansprüche, **dadurch gekennzeichnet, dass** jeder Abstandshalter-Winkelsektor (70) an seinen beiden Umfangsenden Dichtungsnuten (721) zur Aufnahme von Dichtungslaschen aufweist, wobei diese Dichtungslaschen in den Dichtungsnuten (721) zwischen zwei in Umfangsrichtung endseitig angeordneten Abstandshalter-Winkelsektoren (70) angeordnet sind.

8. Turbomaschine, umfassend eine Turbinenanordnung (1) nach einem der vorhergehenden Ansprüche.

## Claims

1. A turbine assembly (1) extending about a longitudinal axis (X-X'), said assembly (1) comprising:
- a plurality of turbine ring sectors (20) made of ceramic matrix composite material, circumferentially assembled end-to-end to form a turbine ring (2), each turbine ring sector (20) comprising a base (21) with a radially inner face (211) and a radially outer face (212) from which an upstream lug (22) and a downstream lug (23), axially spaced apart from each other extend radially outwardly,
- a ring support structure (3), held by an outer annular turbine casing (4), said ring support structure (3) comprising an annular shroud (6), and a plurality of angular spacer sectors (70) together forming an annular spacer (7), said annular spacer (7) being secured to said annular shroud (6), and each turbine ring sector (20) being secured by said lugs (22, 23) to said annular spacer (7),
- at least one air diffuser (8), configured to diffuse cooling air onto said radially outer face (212) of at least one of said turbine ring sectors (20),
- at least one air diffuser (8) is mounted by nesting on one of said angular spacer sectors (70), in a nested position, in that the air diffuser (8) has an internal cavity (80) and a radially inner face (81) pierced by a plurality of air ejection orifices (810) opening out into this cavity (80), in that each angular spacer sector (70) has a radially inner face (712) and has, on its radially inner face (712), a rectilinear engagement groove (74), which has, over part of its length, a nesting zone (742) of T-shaped cross-section, in that each air diffuser (8) is provided, at its radially outer part, with an attachment member (82) also T-shaped, configured to be received and nested in said nesting zone (742), in that the hooking member (82) of the air diffuser (8) is pierced by an air inlet hole (825) opening out into said internal cavity (80) and in that each angular spacer sector (70) comprises at least one air supply duct (75), opening out on the one hand, onto one of its upstream faces (76) and, on the other hand, into the bottom of the T-shaped nesting zone (742) of the groove (74), opposite the mouth of the air intake hole (825) of the diffuser attachment member (82), when this diffuser (8) is in its nested position, so that this air supply duct (75) is in fluid communication with said air ejection orifices (810).

2. The turbine assembly (1) according to claim 1, **characterized in that** said attachment member (82) comprises at least one abutment (821) cooperating with the T-shaped nesting zone (742) of said engagement groove (74), so as to block the axial displacement of the air diffuser (8), once the latter is in the nested position.

3. The turbine assembly (1) according to claim 1 or 2, **characterized in that** each angular spacer sector (70) comprises an upstream hook (714) oriented axially downstream and a downstream finger (713), **in that** the annular shroud (6) comprises two annular grooves (61, 62) opening upstream, and **in that** these grooves (61, 62) are intended to receive said upstream hook (714) and said downstream finger (713) respectively.

4. The turbine assembly (1) according to claim 3, **characterized in that** each spacer sector (70) is provided with an upstream flange (72), and **in that** a turbine nozzle (B), forming a ring disposed upstream of said turbine ring assembly (1), presses axially against this upstream flange (72), in order to hold said upstream hook (714) and said downstream finger (713) respectively in the corresponding grooves (61, 62) of the annular shroud (6).

5. The turbine assembly (1) according to any one of the preceding claims, **characterized in that** said annular shroud (6) comprises a downstream flange (64), this downstream flange (64) having, in the axial direction of the turbine ring (2), a thickness which is generally less than the thickness of the downstream lug (23) of the ring sector (20), the downstream flange (64) exerting a stress on the downstream lug (23) of the ring sector (20).

6. The turbine assembly (1) according to claim 5, **characterized in that** said upstream lug (22) of a ring sector (20) is fixed to the upstream flange (72) of the spacer sector (70) by means of fixing pins (24), **in that** each spacer sector (70) comprises a plurality of downstream ears (73) and **in that** said downstream lug (23) of a ring sector (20) is secured to at least one downstream ear (73) of this same spacer sector (70) by means of fixing pins (25), the pins (24, 25) extending mainly axially.

7. The turbine assembly (1) according to any one of the preceding claims, **characterized in that** each angular spacer sector (70) has, at its two circumferential ends, sealing grooves (721) for receiving sealing tabs, these sealing tabs being disposed in said sealing grooves (721) between two angular spacer sectors (70) disposed circumferentially end to end.

8. A turbomachine comprising a turbine assembly (1) according to any one of the preceding claims.
